# EUROPÄISCHE PATENTANMELDUNG

(11) **EP 2 110 279 A2**
(43) Veröffentlichungstag der Anmeldung: **21.10.2009**
(21) Anmeldenummer: 09003243.4
(22) Anmeldetag: 06.03.2009
(51) Int. Cl.: B60J 10/02, B60J 10/00

(54) **Dichtungsanordnung für eine feste KFZ-Glasscheibe**

(30) Priorität: 18.04.2008 DE 102008019653
(71) Anmelder: Henniges Automotive GmbH & Co. KG, 31547 Rehburg Loccum (DE)
(72) Erfinder: Kreye, Bernhard, 31515 Wunstorf (DE)
(74) Vertreter: Jabbusch, Matthias

(57) **Zusammenfassung**

Bei einem Plattenelement, insbesondere einer Kraftfahrzeug-Glasscheibe, die mit einer Umrahmung ausgerüstet ist, weist die Umrahmung wenigstens zwei gegenseitig miteinander lösbar verbundene Strangprofile (4,5) auf, die derart zusammengefügt sind, daß der Rand (3) der Glasscheibe (2) von den Strangprofilen (4,5) der Umrahmung eingefaßt ist. Mindestens ein erstes Strangprofil der gegenseitig zusammenfügbaren Strangprofile der Umrahmung ist mit wenigstens einer Oberfläche der in der Nähe des Randes befindlichen Oberflächen der Glasscheibe verbunden. Die Zusammenfügung zwischen den Strangprofilen ist als Formschlußverbindung ausgebildet.

## Beschreibung

Die Erfindung bezieht sich auf ein Plattenelement, insbesondere Kraftfahrzeug-Glasscheibe, die mit einer Umrahmung ausgerüstet ist.

Die mit der Herstellung von Kraftfahrzeugen befaßte Automobilindustrie bevorzugt den Einsatz vorgefertigter Scheibenmodule, die in Form von kompletten Einbaueinheiten dem Einbauort im Werk zugeführt und dort bis zum Einbau in die jeweilige Karosserie bereitgehalten werden können.

Am Einbauort innerhalb einer Fertigungslinie für Automobile sollen möglichst bereits durch Vorfertigung an anderer Stelle mit einer Umrahmung ausgerüstete Scheibenmodule zur Verfügung stehen, sodaß die Montagevorgänge auf Handhaben, Ausrichten, Einsetzen und Befestigen der Scheibenmodule beschränkt sind.

Dabei hat sich gezeigt, daß übliche Umrahmungen aufgrund ihrer Dimensionierungen die Stapelhöhe der Glasscheiben vergrößern, woraus sich logistische Nachteile ergeben.

Auch die Recycling-Möglichkeiten sind bei herkömmlich vorgefertigten Scheibenmodulen stets ein Kriterium von neuerdings zunehmender Bedeutung.

Der Erfindung liegt die Aufgabe zugrunde, ein Plattenelement, insbesondere eine Kraftfahrzeug-Glasscheibe, so auszugestalten, daß bei optimalen Recycling-Möglichkeiten auch Logistikprobleme auf ein Minimum reduziert sind.

Diese Aufgabe ist durch die Merkmale des Patentanspruchs 1 gelöst.

Weiterbildungen und vorteilhafte Ausgestaltungen ergeben sich aus den Unteransprüchen 2 bis 14.

Gemäß der Erfindung wird eine Kraftfahrzeug-Glasscheibe zunächst lediglich mit einem Teil einer Umrahmung ausgerüstet. Weitere Teile der Umrahmung werden zu ihrer Ergänzung dann, während des Einbaues und der Befestigung der Glasscheibe in der Karosserieöffnung, an die bereits an der Glasscheibe vorhandenen Teile der Umrahmung gesetzt und damit verbunden.

Der Einbauvorgang der Glasscheibe umfaßt somit nicht nur Arbeitsschritte für den eigentlichen Einbau, sondern auch zugleich Arbeitsschritte, mittels denen die Ausrüstung der Scheibe mit der jeweiligen Umrahmung komplettiert wird.

Demzufolge sind Arbeitsvorgänge für die Ausrüstung mit besonderem Vorteil in die Montagevorgänge, durch welche die Glasscheibe in die Fahrzeugkarosserie eingesetzt wird, integriert.

Der Rand der Glasscheibe ist von der Zusammenfügung aus Strangprofilen, also von der Umrahmung, eingefaßt.

Daraus ergibt sich der Vorteil, daß die Gesamtdicke der Einfassung zunächst, noch vor dem Vorgang des Zusammenfügens, auf ein vorteilhaft geringeres Maß reduziert ist. Die Anzahl von in einem Stapel ablegbaren Glasscheiben mit lediglich einer Hälfte, beziehungsweise einen Teil der Einfassung ist erhöht, woraus sich logistische Vorteile ergeben.

Nach einer Weiterbildung zeichnet sich das Plattenelement dadurch aus, daß mindestens ein erstes Strangprofil der gegenseitig zusammenfügbaren Strangprofile der Umrahmung mit wenigstens einer der in Randnähe befindlichen Oberflächen der Glasscheibe verbunden ist.

Dadurch, daß mindestens ein erstes Strangprofil der gegenseitig zusammenfügbaren Strangprofile der Umrahmung mit wenigstens einer der in der Nähe des Randes der Glasscheibe befindlichen Oberflächen der Glasscheibe verbunden ist, ist das Plattenelement, die Kraftfahrzeug-Glasscheibe dann, wenn das zweite Rahmenprofil angefügt ist, zugleich in der Öffnung der Karosserie montiert.

Umgekehrt kann durch Lösen des zweiten Strangprofils vom ersten Strangprofil eine eingebaute Glasscheibe einfach und unkompliziert ausgebaut und einem Recycling zugeführt werden.

Das somit entfernbare zweite Strangprofil kann mit Vorteil dann, wenn es aufgrund seiner Beschaffenheit und/oder seines Werkstoffes einer getrennten Entsorgung zuzuführen ist, separat recycelt werden.

Das erste Strangprofil kann in der dafür vorgesehenen Position an die Glasscheibe gesetzt und damit fest verbunden werden. Das Verbinden kann mit entsprechenden Klebern erfolgen, zum Beispiel Kontaktklebern oder aushärtenden beziehungsweise abbindenden Klebstoffen.

Die Verwendung solcher Klebstoffe erfordert jedoch in der Regel die Vorbereitung der gegenseitigen Anlageflächen von Strangprofil und Glasscheibe, zum Beispiel durch Reinigen und anschließendes Primern.

Die für die entsprechenden Vorarbeiten erforderlichen Arbeitsgänge und Rüstzeiten entfallen bei dem erfindungsgemäßen Plattenelement, da für die Verklebung des ersten Strangprofils mit der Glasscheibe ein Schmelzkleber eingesetzt wird.

Alternativ ist auch eine Verbindung beziehungsweise Verklebung mit einem doppelseitigen Klebeband möglich.

Ebenso wie der Schmelzkleber den Vorteil aufweist, daß er durch entsprechende Wärmebeaufschlagung aktivierbar ist, kann auch ein Klebeband aktivierbar ausgestaltet sein. Es kann zum Beispiel durch Wärmezufuhr oder durch Abziehen einer Abdeckfolie aktiviert werden.

Die Verbindung zwischen den zusammenfügbaren Strangprofilen ist mit Vorteil als Formschlußverbindung ausgebildet. Eine besonders geeignete Formschlußverbindung zeichnet sich dadurch aus, daß sie eine Vertiefung in einem der Strangprofile aufweist und einen Vorsprung am jeweils anderen Strangprofil, wobei Vertiefung und Vorsprung elastisch miteinander verklipsbar sind.

Das erste Strangprofil ist vorzugsweise ein Extrudat, beziehungsweise ein extrudiertes Profil, kann jedoch, ebenso wie das zweite Strangprofil, ein Formteil sein. Das Extrudat ist so profiliert, daß es einen mit einer der freien Oberflächen der Glasscheibe, zum Beispiel durch den vorbeschriebenen Schmelzkleber verbindbaren Verbindungsschenkel aufweist. Des weiteren weist das Profil des ersten Profilstranges einen bei mit der Glasscheibe verbundenem Strangprofil über den benachbarten Außenrand der Glasscheibe vorstehenden Schenkelkopf auf. Der Schenkelkopf befindet sich folglich in einem Bereich vor der Scheibe, sodaß die Dicke einer Scheibe durch die Ausrüstung mit dem ersten Strangprofil lediglich in einer noch akzeptablen Größenordnung zunimmt.

Da der Schenkelkopf aufgrund seines vorbeschriebenen Sitzes vor dem Außenrand der Glasscheibe auch einigermaßen voluminös sein kann, ist die Anordnung der Elemente für die vorteilhafte Formschlußverbindung mit dem zweiten Strangprofil, verhältnismäßig problemlos.

Mit besonderem Vorteil ist eine Formschlußverbindung gewählt, die es ermöglicht, den Vorsprung des zweiten Strangprofils mit der Vertiefung des ersten, an der Scheibe befestigten Strangprofils elastisch zu verklipsen.

Um die mit dem ersten Strangprofil ausgerüstete Glasscheibe in eine Öffnung einer Karosserie einzubauen, genügt es somit, die jeweilige Glasscheibe in der Öffnung zu positionieren und ein zweites Strangprofil an das erste Strangprofil der positionierten Glasscheibe zu drücken, bis die Formschlußelemente miteinander elastisch verrastet und somit zusammengefügt sind.

Soll die derart eingebaute Glasscheibe, zum Beispiel zu Reparatur- oder Recyclingzwecken, wieder demontiert werden, reicht es aus, daß zweite Strangprofil durch kräftigen Zug aus der Formschlußverbindung mit dem ersten Strangprofil zu lösen. Dies ermöglicht insbesondere die Ausbildung der Vertiefung im Schenkelkopf als hinterschnittene Nut.

Der Vorsprung, als weiteres Element der Formschlußverbindung, ist vorzugsweise als eine Leiste mit pilzkopfähnlichem Querschnitt ausgebildet.

Vorsprünge können auch durch Reihen von einzelnen Pilzköpfen gebildet sein. Ebenso kann die Nut durch eine Reihe von Einzelvertiefungen ersetzt werden, sodaß eine Art "Druckknopfverbindung" zwischen den Strangprofilen entsteht.

Mit besonderem Vorteil ist vorgesehen, daß das zweite Strangprofil an seiner sichtseitigen Außenfläche wenigstens ein Zierelement aufweist.

Die Ausrüstung des zweiten Strangprofils mit einem Zierelement ist auch noch nachträglich möglich, daß heißt dann, wenn die Zusammenfügung aus erstem und zweitem Strangprofil bereits gebildet ist, was dann der Fall ist, wenn die Glasscheibe in die Öffnung der Fahrzeugkarosserie eingebaut ist.

Die Erfindung bietet somit den Vorteil, daß das zweite Strangprofil nicht nur die Funktion einer Beteiligung an der Fixierung der Glasscheibe in der Karosserieöffnung ausübt, sondern gleichzeitig auch noch als Zierelement dienen kann, falls dies erwünscht ist.

Die Funktion als Zierelement kann durch entsprechende Kombination von Merkmalen der Formgebung, Oberflächenstruktur oder auch Farbgebung des zweiten Strangprofils verwirklicht werden. Darüber hinaus sind auch besondere Zierteile, wie zum Beispiel Zierleisten aus Metall oder sonstigen geeigneten Werkstoffen, einsetzbar.

Diese können, wie bereits gesagt, auch noch nachträglich mit den jeweiligen Strangprofilen verbunden werden, zum Beispiel durch Befestigen mittels weiterer Formschlußelemente.

Für die erfindungsgemäße Zusammenfügung ist demzufolge wesentlich, daß sie ein als Halteteil wirkendes erstes Strangprofil und ein als Befestigungsteil und/oder Zierteil wirkendes zweites Strangprofil aufweist.

Mit besonderem Vorteil ist der Werkstoff für das als Halteteil wirkende erste Strangprofil ein thermoplastischer Werkstoff mit der Härte 30 bis 90 Shore D und das zweite Strangprofil ein Extrudat aus einem Werkstoff mit der Härte 40 bis 85 Shore A.

In der erfindungsgemäßen Zusammenfügung ist somit das erste Strangprofil aus einem harten Werkstoff, zum Beispiel Polypropylen, gefertigt und daß zweite Strangprofil aus einem demgegenüber weichen Werkstoff wie zum Beispiel Gummi, thermoplastisches Elastomer oder Weich-PVC. Die unterschiedlichen Härten erleichtern das Zusammenfügen der Formschlußverbindungen.

Die Glasscheibe kann, ausgerüstet mit dem ersten Strangprofil, angeliefert werden. Die Zusammenfügung mit dem zweiten Strangprofil kann dann wahlweise mit oder ohne eine Zierleiste erfolgen, woraus sich logistische Vorteile ergeben. Außerdem ist die größere Packungsdichte der ohne die zweiten Strangprofile angelieferten Glasscheiben von Vorteil.

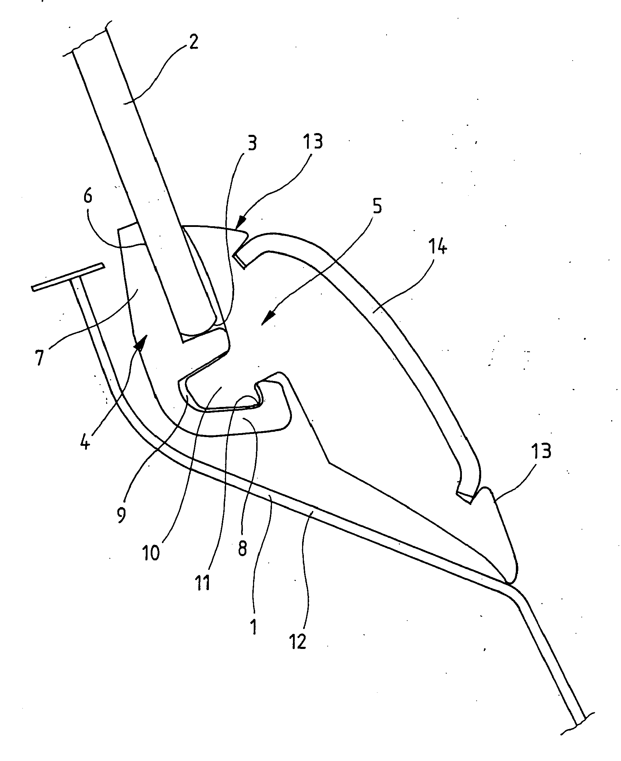

Ein Ausführungsbeispiel der Erfindung, aus dem sich weitere erfinderische Merkmale ergeben, ist in der Zeichnung dargestellt.

Die Zeichnung zeigt einen Teilbereich einer durch den Karosserieflansch 1 begrenzten Karosserieöffnung, in die eine erfindungsgemäß ausgerüstete Glasscheibe 2 eingesetzt ist. Der untere Rand 3 der Glasscheibe ist mit einer Umrahmung ausgerüstet, die zwei gegenseitig miteinander lösbar verbundene Strangprofile 4 und 5 aufweist, die derart zusammengefügt sind, daß der Rand 3 der Glasscheibe 2 von den Strangprofilen 4 und 5 der Umrahmung eingefaßt ist.

Das erste Strangprofil 4 der gegenseitig zusammenfügbaren Strangprofile 4 und 5 der Umrahmung ist mit der in der Nähe des Randes 3 befindlichen Oberfläche 6 der Glasscheibe 2 verbunden, zum Beispiel durch einen Schmelzklebstoff. Das erste Strangprofil 4 ist aus einem thermoplastischen Werkstoff mit einer Härte von 30 bis 60 Shore D stranggepreßt. Dabei ist ein Verbindungsschenkel 7 ausgeformt, der mit der Oberfläche 6 der Glasscheibe verklebbar ist. Des weiteren weist das erste Strangprofil 4 den über dem benachbarten Außenrand 3 der Glasscheibe vorstehenden Schenkelkopf 8 auf, in den eine als hinterschnittene Nut 9 ausgebildete Vertiefung eingeformt ist.

Das zweite Strangprofil 5 ist ein vorgefertigtes Formteil aus zum Beispiel PVC oder Thermoplast mit einer Härte von 50 bis 80 Shore A. Während das erste Strangprofil 4 somit relativ hart ist, ist das zweite Strangprofil 5 relativ weich.

Das zweite Strangprofil 5 weist einen als Leiste ausgebildeten Vorsprung 10 auf, an den eine Rastnase 11 angeformt ist. Das zweite Strangprofil 5 ist mit dem ersten Strangprofil 4 formschlüssig zusammenfügbar und verrastbar, um die die Glasscheibe 2 einfassende Umrahmung gemeinsam auszubilden.

Mit 12 ist der eine Karosserieöffnung begrenzende Karosserieflansch bezeichnet. In die durch den Karosserieflansch 12 begrenzte Karosserieöffnung wird die Glasscheibe wie folgt eingesetzt:

Nachdem die Glasscheibe 2, die mit dem ersten Strangprofil 4 verklebt ist, in der Karosserieöffnung positioniert ist, erfolgt das Eindrücken des zweiten Strangprofils 5 mit seinem Vorsprung 10 in die Nut 9 des Schenkelkopfes 8 des ersten Strangprofils 4. Erstes Strangprofil 4 und zweites Strangprofil 5 sind durch das Verrasten mit der Rastnase 11 in der Vertiefung, die als hinterschnittene Nut 9 vorliegt, miteinander verrastet und verbunden.

An der Sichtseitenoberfläche 13 des zweiten Strangprofils 5 ist eine Zierleiste 14 angeordnet.

## Patentansprüche

1. Plattenelement, insbesondere Kraftfahrzeug-Glasscheibe, die mit einer Umrahmung ausgerüstet ist,
**dadurch gekennzeichnet,**
**daß** die Umrahmung wenigstens zwei gegenseitig miteinander lösbar verbundene Strangprofile (4, 5) aufweist, die derart zusammengefügt sind, daß der Rand (3) der Glasscheibe (2) von den Strangprofilen (4, 5) der Umrahmung eingefaßt ist.

2. Plattenelement nach Anspruch 1, **dadurch gekennzeichnet, daß** mindestens ein erstes Strangprofil (4) der gegenseitig zusammenfügbaren Strangprofile (4, 5) der Umrahmung mit wenigstens einer Oberfläche (6) der in der Nähe des Randes (3) befindlichen Oberflächen der Glasscheibe (2) verbunden ist.

3. Plattenelement nach einem der Ansprüche 1 und 2, **dadurch gekennzeichnet, daß** das erste Strangprofil mit der Glasscheibe verklebt ist.

4. Plattenelement nach Anspruch 3, **dadurch gekennzeichnet, daß** der Klebstoff für die Verbindung zwischen erstem Strangprofil (4) und Glasscheibe (2) ein Schmelzklebstoff ist.

5. Plattenelement nach Anspruch 3, **dadurch gekennzeichnet, daß** zwischen dem ersten Strangprofil (4) und der Glasscheibe (2) ein doppelseitiges Klebeband angeordnet ist.

6. Plattenelement nach einem der vorhergehenden Ansprüche, **dadurch gekennzeichnet, daß** die Verbindung zwischen den zusammenfügbaren Strangprofilen (4, 5) als Formschlußverbindung ausgebildet ist.

7. Plattenelement nach Anspruch 6, **dadurch gekennzeichnet, daß** die Formschlußverbindung eine Vertiefung in einem der Strangprofile (4) aufweist und einen Vorsprung am jeweils anderen Strangprofil (5), wobei Vertiefung und Vorsprung elastisch miteinander verklipsbar sind.

8. Plattenelement nach Anspruch 7, **dadurch gekennzeichnet, daß** das erste Strangprofil (4) ein vorgefertigtes Extrudat ist, welches einen mit einer der freien Oberflächen (6) der Glasscheibe verbindbaren Verbindungsschenkel (7) aufweist, sowie einen über den benachbarten Außenrand (3) der Glasscheibe (2) vorstehenden Schenkelkopf (8), in dem die Vertiefung der Formschlußverbindung angeordnet ist.

9. Plattenelement nach einem der Ansprüche 6 bis 8, **dadurch gekennzeichnet, daß** die Vertiefung als hinterschnittene Nut (9) ausgebildet ist.

10. Plattenelement nach einem der Ansprüche 6 bis 9, **dadurch gekennzeichnet, daß** der Vorsprung (10) als eine Leiste mit pilzkopfähnlichem Querschnitt ausgebildet ist.

11. Plattenelement nach einem der vorhergehenden Ansprüche, **dadurch gekennzeichnet, daß** das zweite Strangprofil (5) an seiner sichtseitigen Außenfläche (13) wenigstens ein Zierelement aufweist.

12. Plattenelement nach Anspruch 11, **dadurch gekennzeichnet, daß** jedes Zierelement als eine an der sichtseitigen Außenfläche (13) des zweiten Strangprofils (5) anordbare Zierleiste (14) ausgebildet ist.

13. Plattenelement nach einem der vorhergehenden Ansprüche, **dadurch gekennzeichnet, daß** der Werkstoff für das erste Strangprofil (4) ein Thermoplast mit einer Härte von 30 bis 90 Shore D ist.

14. Plattenelement nach einem der Ansprüche 1 bis 12, **dadurch gekennzeichnet, daß** jedes zweite Strangprofil (5) aus einem Werkstoff mit einer Härte von 40 bis 85 Shore A vorgefertigt ist.
